# EUROPÄISCHE PATENTSCHRIFT

(11) **EP 2 180 347 B1**
(45) Veröffentlichungstag und Bekanntmachung des Hinweises auf die Patenterteilung: **22.06.2011**
(21) Anmeldenummer: 08018504.4
(22) Anmeldetag: 22.10.2008
(51) Int. Cl.: G01V 8/20, G01V 8/22

(54) **Mehrstrahliges Reflexionslichtgitter und Verfahren zum Ausrichten eines mehrstrahligen Reflexionslichtgitters**
Multiple beam reflection light box and method for aligning a multiple beam reflection light box
Barrière lumineuse de réflexion à rayons multiples et procédé destiné à l'alignement d'une barrière lumineuse de réflexion à rayons multiples

(43) Veröffentlichungstag der Anmeldung: 28.04.2010
(73) Patentinhaber: Pepperl + Fuchs GmbH, 68307 Mannheim (DE)
(72) Erfinder: Schröder, Thorsten, 12621 Berlin (DE); Bartsch, Stephan, 12207 Berlin (DE); Czeskleba, Marco, 12167 Berlin (DE)
(74) Vertreter: Schiffer, Axel Martin

(56) Entgegenhaltungen:
- EP-A- 0 889 332
- EP-A- 1 544 643
- EP-A- 1 921 469
- EP-A- 1 993 081
- DE-A1-102006 050 189

## Beschreibung

Die Erfindung betrifft ein mehrstrahliges Reflexionslichtgitter mit einer Sender-Empfänger-Einheit, welche eine Mehrzahl von Lichtsendern zum Aussenden von Licht in einen Überwachungsbereich und mindestens einen Empfänger zum Nachweisen von aus dem Überwachungsbereich kommendem Licht aufweist. Ferner betrifft die Erfindung ein Verfahren zum Ausrichten dieses mehrstrahligen Reflexionslichtgitters.

Dieses mehrstrahlige Reflexionslichtgitter basiert auf den bekannten Einzelstrahl-Reflexions-Lichtschranken, wobei Lichtsender und mindestens ein Empfänger in einem gemeinsamen kompakten Gehäuse, das einem Lichtgitter nahe kommt, angeordnet sind. Dazu können mehrere Lichtsender nahezu zeilenartig nebeneinander beabstandet angeordnet sein. Ein den Lichtsendern gegenüber angeordneter Reflektor begrenzt den Überwachungsbereich und dient dem Rückstrahlen des Lichts der Lichtsender in Richtung des Empfängers, der ebenfalls in dem kompakten Gehäuse einer Sender-Empfänger-Einheit vorhanden ist.

Ein Problem eines derartigen mehrstrahligen Reflexionslichtgitters liegt darin, dass eine Ausrichtung der Sender-Empfänger-Einheit auf den Reflektor schwierig ist und nicht immer eine optimale reflektierte Lichtintensität liefert, obgleich kein zu überwachendes Objekt in dem Überwachungsbereich vorhanden ist.

Ein Lichtgitter mit einem Ausrichtlichtsender ist zudem aus DE 10 2006 050 189 A1 bekannt. Das Lichtgitter umfasst Sender, die Licht in Richtung von Empfängern aussenden. Zusätzlich ist ein Ausrichtlichtsender vorhanden, dessen Licht von einem Ausrichtlichtempfänger nachgewiesen wird. Während das Licht der Sender zur Überwachung eines Überwachungsbereichs dient, wird das Licht der Ausrichtlichtsender ausschließlich zum Ausrichten des Senders bezüglich des Empfängers verwendet und nicht etwa zur Überwachung des Überwachungsbereichs.

In EP 0 889 332 A1 ist eine Lichtschranke mit Ausrichthilfe beschrieben. Die Lichtschranke umfasst Sender und Empfänger, die einen Überwachungsbereich aufspannen. Zur Justage der Sender und Empfänger sind zusätzliche Lichtquellen vorgesehen, welche nicht zur Überwachung des Überwachungsbereichs verwendet werden.

Gegenstand der vorangemeldeten aber nachveröffentlichten Schrift EP 1 993 081 A1 ist eine Sensoranordnung zur Überwachung eines Überwachungsbereichs. Hierbei sind Sender vorhanden, die Licht in einen Überwachungsbereich aussenden, und Empfänger, die aus dem Überwachungsbereich kommendes Licht nachweisen. Zum Beheben einer Fehlpositionierung zwischen Sender und Empfänger bestehen die Empfänger aus ortsauflösenden Elementen, so dass die Richtung der Fehlpositionierung bestimmt werden kann.

Eine Aufgabe der Erfindung besteht darin, eine Vorrichtung und ein Verfahren zu schaffen, mit denen eine optimale Ausrichtung der Sender-Empfänger-Einheit schnell und zuverlässig von einem Benutzer oder Geräteeinrichter vorgenommen werden kann, so dass ein hoher Anteil des reflektierten Lichts auf den oder die Empfänger der Sender-Empfänger-Einheit fällt. Dabei kann in erster Näherung davon ausgegangen werden, dass die Lichtsender mit Hilfe der Sender-Empfänger-Einheit und der gegenüber angeordnete Reflektor einen Überwachungsbereich aufspannen, der in einer Überwachungsebene liegt. Unter dieser Voraussetzung wird die Aufgabe durch einen Gegenstand mit den Merkmalen der unabhängigen Ansprüche gelöst. Vorteilhafte Weiterbildungen der Erfindung ergeben sich aus den abhängigen Ansprüchen und der folgenden Beschreibung.

Erfindungsgemäß wird ein mehrstrahliges Reflexionslichtgitter mit einer Sender-Empfänger-Einheit, welche eine Mehrzahl von Lichtsendern zum Aussenden von Licht in einen Überwachungsbereich aufweist, geschaffen. Dazu weist das mehrstrahlige Reflexionslichtgitter mindestens einen Empfänger zum Nachweisen von aus dem Überwachungsbereich kommendem Licht auf. Die Lichtsender sind nahezu zeilenartig nebeneinander beabstandet angeordnet. Ein Reflektor ist zum Begrenzen des Überwachungsbereichs und zum Zurückstrahlen des Lichts der Lichtsender in Richtung des Empfängers oder der Empfänger gegenüberliegend zu der Sender-Empfänger-Einheit angeordnet. Eine Steuer- und Auswerteeinheit ist zum Ansteuern der Lichtsender und zum Auswerten der von dem Empfänger oder den Empfängern nachgewiesenen Lichtintensitäten vorgesehen. Diese Steuer- und Auswerteeinheit ist eingerichtet, um eine Bewegungsrichtung der Sender-Empfänger-Einheit und/oder des Reflektors zu ermitteln, die ein Beheben einer Fehlpositionierung der Sender-Empfänger-Einheit bezüglich des Reflektors auf Grundlage der von dem Empfänger oder den Empfängern nachgewiesenen Lichtintensitäten ermöglicht. Schließlich ist eine Anzeigeeinrichtung mindestens zum Anzeigen der ermittelten Bewegungsrichtung für einen Benutzer vorhanden.

Bei dem erfindungsgemäßen mehrstrahligen Reflexionslichtgitter kann bevorzugt eine "Kontrasterkennung" bzw. "Kontrastbewertung" durchgeführt werden. Außerdem ist es für die Steuer- und Auswerteeinheit in Verbindung mit der Anzeigeeinrichtung möglich, eine korrigierbare und funktionssichere Installation des Geräts zu gewährleisten. Mit dem mehrstrahligen Reflexionslichtgitter können Objekte mit undefinierter oder schlecht definierter Vorderkante sowie beschädigte Objekte sicher erfasst werden, die bei Einzelstrahl-Reflexions-Lichtschranken nicht erfasst oder detektiert würden und somit in einem automatischen Erkennungssystem zu erheblichen Störungen führen können. Mit dem mehrstrahligen Reflexionslichtgitter wird somit die Sicherheit der Erkennung eines Objekts im Überwachungsbereich deutlich verbessert.

Durch die Anzeigeeinrichtung, die zum Anzeigen einer Bewegungsrichtung für einen Benutzer vorhanden ist, wird die Installation und Justage des mehrstrahligen Reflexionslichtgitters vereinfacht und kann somit auch von lediglich eingewiesenem Personal zuverlässig und sicher installiert werden. Wesentlich hierfür ist, dass durch die Anzeigeeinrichtung auch eine Bewegungsrichtung vorgegeben wird, in die eine Korrektur und Optimierung des mehrstrahligen Reflexionslichtgitters zu erfolgen hat. Innerhalb eines derart fest definierten Überwachungsbereichs können dann selbst teilweise beschädigte Objekte nach einer so genannten "Teach-in"-Phase mit hoher Zuverlässigkeit und Sicherheit erkannt werden.

In einer bevorzugten Ausführungsform der Erfindung ist die Steuer- und Auswerteeinheit derart eingerichtet, dass sie auch ein quantitatives Bestimmen der relativen Ausrichtung von Sender-Empfänger-Einheit und Reflektor auf der Grundlage der vom Empfänger oder den Empfängern nachgewiesenen Lichtintensitäten liefern kann. Dabei kann mit Hilfe der vorhandenen Anzeigeeinrichtung und/oder einer weiteren Anzeigeeinrichtung die relative Ausrichtung der Sender-Empfänger-Einheit in Bezug auf den Reflektor an einen Benutzer quantitativ signalisiert werden. Aufgrund einer derartigen Signalisierung kann der Benutzer das Reflexionslichtgitter auf höchste reflektierte Lichtintensität abgleichen und damit nicht nur Fehlpositionen ausgleichen und korrigieren, sondern in einer optimalen Position eine maximale Empfindlichkeit des Reflexionslichtgitters erreichen.

Die Anzeigeeinrichtung oder gegebenenfalls die mehreren Anzeigeeinrichtungen können prinzipiell an einer beliebigen Position des Reflexionslichtgitters positioniert sein. Zweckmäßig werden die Anzeigeeinrichtungen an einem von einem Benutzer gut einsehbaren Ort angebracht.

Beispielsweise können die Anzeigen an einem oberen oder einem unteren Gehäuseende montiert sein. Es kann sich hierbei zum Beispiel um Pfeilanzeigen handeln.

Bei einer besonders bevorzugten Ausführungsvariante ist vorgesehen, dass zum Anzeigen einer ersten Bewegungsrichtung die Anzeigeeinrichtung eine erste LED an einem ersten Rand der Sender-Empfänger-Einheit und zum Anzeigen einer zweiten entgegengesetzten Bewegungsrichtung eine zweite LED an einem zweiten Rand der Sender-Empfänger-Einheit aufweist. Mit einer derartigen optischen Anzeigeeinrichtung wird die Richtung, in welche die Sender-Empfänger-Einheit und/oder der Reflektor zu schwenken sind, dem Benutzer signalisiert, um eine Einhaltung des Überwachungsbereichs durch Ausrichtung aller Lichtsender auf den Reflektor sicherzustellen. Dabei wird mit der Anzeigeeinrichtung und den beiden LEDs dem Anwender mitgeteilt, wie die momentane Ausrichtung der Sender-Empfänger-Einheit ist und in welche Richtung er die Sender-Empfänger-Einheit gegenüber dem Reflektor bewegen kann, damit alle Lichtstrahlen der Sender-Empfänger-Einheit auf den Reflektor treffen.

Dabei begrenzen die Sender-Empfänger-Einheit und der Reflektor den Überwachungsbereich und sind einander gegenüberliegend in einer Überwachungsebene angeordnet, wobei die Sender-Empfänger-Einheit und/oder der Reflektor um eine Achse, die quer zu dieser Überwachungsebene angeordnet ist, schwenkbar sind. Dabei gibt die Anzeigeeinrichtung eine Bewegungsrichtung vor, um die vorzugsweise die Sender-Empfänger-Einheit zu schwenken ist, um eine Fehlposition, bei der nicht alle Lichtsender auf den Reflektor treffen, durch eine Schwenk- oder Drehbewegung zu korrigieren.

Die Lichtsender der Sender-Empfänger-Einheit sind vorzugsweise mindestens in eine erste und eine zweite Gruppe aufgeteilt, wobei die erste Gruppe bei einer ersten Fehlpositionierung der Sender-Empfänger-Einheit ein erstes Ende des Reflektors überschreiten kann und die zweite Gruppe bei einer zweiten Fehlpositionierung der Sender-Empfänger-Einheit ein zweites Ende des Reflektors überschreiten kann. Werden folglich die Enden des Reflektors durch die Lichtsender überschritten, wobei eindeutig zwischen einem ersten und einem zweiten Ende des Reflektors unterschieden wird, so kennzeichnet eine derartige Fehlpositionierung die Steuer- und Auswerteeinheit durch unterschiedliche optische Signale, welche über die Anzeigeeinrichtung dem Benutzer übermittelt werden. Dabei können die optischen Signale an unterschiedlichen Positionen aufleuchten und/oder unterschiedliche Farben aufweisen und/oder unterschiedliche Impulslängen beim Überschreiten der Reflektorenden signalisieren.

Ferner kann vorgesehen sein, dass vorzugsweise sechs Lichtsender einer Sender-Empfänger-Einheit in zwei Gruppen "oben" und "unten" unterteilt und jeweils einer LED-Anzeige, die oben bzw. unten am Gehäuse der Sender-Empfänger-Einheit angeordnet ist, zugeteilt werden. Strahlen somit alle Sender einer Dreiergruppe nicht auf den Reflektor, so ist die zugeordnete LED-Anzeige aus, was dem Benutzer signalisiert, dass eine erhebliche Fehlpositionierung auszugleichen ist. Sind jedoch lediglich ein oder zwei Lichtsender nicht auf dem Reflektor zu finden, so kann die LED-Anzeige der entsprechenden Gruppe durch Blinken beispielsweise in unterschiedlichen Impulslängen signalisieren, dass lediglich eine kleine Korrektur der Fehlposition erforderlich ist. Wird folglich der erste Rand des Reflektors überschritten, so ist die erste LED aus oder leuchtet im Blinklicht auf, und wird das zweite Ende des Reflektors überschritten, ist die zweite LED-Anzeige aus oder leuchtet im Blinklicht auf, je nach der Größe der Fehlpositionierung.

Prinzipiell sind auch andere Formen der optischen Signalisierung möglich. Beispielsweise können die Zustände "aus", "blinkend" und "dauernd an" gegeneinander ausgetauscht werden. Hierzu muss dann eine entsprechende Definition der Signale getroffen werden.

Alternativ oder zusätzlich kann die Steuer- und Auswerteeinheit bei einer Fehlpositionierung auch durch akustische Signale über die Anzeigeneinrichtung mit unterschiedlichen Frequenzen und/oder mit unterschiedlichen Impulslängen ein Überschreiten der Reflektorenden kennzeichnen. Derartige akustische Signale sind auch hilfreich, wenn nach Ausgleich der Fehlpositionierungen nun das mehrstrahlige Reflexionslichtgitter auf höchste Empfindlichkeit quantitativ abzugleichen ist. Hier kann ein Kippen der Sender-Empfänger-Einheit um seine Längsachse eine optimale Einstellung der höchsten reflektierten Lichtintensität vorzugsweise durch akustische Signale signalisiert werden, wobei die Lautstärke des akustischen Signals oder die Frequenz des akustischen Signals die höchste reflektierte Lichtintensität dem Benutzer signalisieren kann, um die quantitativ optimale Einstellung des mehrstrahligen Reflexionslichtgitters zu erreichen.

In einem bevorzugten Verfahren zum Ausrichten eines mehrstrahligen Reflexionslichtgitters, wie es oben beschrieben wurde, wird aus der Mehrzahl von Lichtsendern mindestens eine erste und eine zweite Gruppe von Lichtsendern ausgewählt. Mit Hilfe der Anzeigeeinrichtung wird eine erste Bewegungsrichtung für einen Benutzer durch ein erstes Signal angezeigt, wenn Licht von mindestens einem Lichtsender der ersten Gruppe nicht von dem Reflektor zurückreflektiert und nicht von mindestens einem Empfänger nachgewiesen wird. Ferner wird von der Anzeigeeinrichtung eine zweite Bewegungsrichtung, die der ersten Bewegungsrichtung entgegengesetzt ist, durch ein zweites Signal angezeigt, wenn Licht von mindestens einem Lichtsender der zweiten Gruppe nicht von dem Reflektor zurückreflektiert und nicht von mindestens einem Empfänger nachgewiesen wird, so dass aufgrund der Signale der Anzeigeeinrichtung von dem Benutzer eine Korrektur einer Fehlpositionierung durchgeführt werden kann. Dieses Verfahren ermöglicht eine einfache Installation und Justage des mehrstrahligen Reflexionslichtgitters, da es die Richtung vorgibt, in die eine erfolgreiche Korrektur einer Fehlpositionierung kurzfristig erreicht werden kann. Dabei wird dem Anwender durch getrennte LED-Anzeigen die Richtung der Justage derart vorgegeben, dass die Sender-Empfänger-Einheit auf den Reflektor geschwenkt werden kann, um eine vollständige Abbildung aller Sender auf dem Reflektor zu gewährleisten.

Nach dem Durchführen der Korrektur von Fehlpositionen kann eine quantitative Messung der empfangenen Lichtintensität erfolgen. Die Position der Sender-Empfänger-Einheit wird dazu parallel zu einer Überwachungsebene solange in Bezug auf den Reflektor geändert, bis eine maximale Lichtintensität an dem Empfänger oder den Empfängern erfasst und über die Anzeigeeinrichtung optisch oder akustisch signalisiert wird. Neben einer parallelen Verschiebung der Sender-Empfänger-Einheit in Bezug auf die Überwachungsebene ist es auch möglich, die Sender-Empfänger-Einheit um eine Längsachse zu kippen, bis eine maximale Lichtintensität an dem Empfänger oder den Empfängern erfasst und über die Anzeigeeinrichtung optisch oder akustisch signalisiert wird.

Ein Verfahren zum Ausrichten des mehrstrahligen Reflexionslichtgitters weist die nachfolgenden Verfahrensschritte auf. Zunächst wird eine erste Fehlpositionierung an einem ersten Rand der Sender-Empfänger-Einheit erfasst, wenn ein Lichtsender der ersten Gruppe der Sender-Empfänger-Einheit ein erstes Reflektorende überschreitet. Eine zweite Fehlpositionierung an einem zweiten Rand der Sender-Empfänger-Einheit wird erfasst, wenn ein Lichtsender der zweiten Gruppe der Sender-Empfänger-Einheit ein zweites Reflektorende überschreitet. Dazu wird vorzugsweise von der ersten Gruppe ein Lichtsender möglichst nahe an dem ersten Rand der Sender-Empfänger-Einheit positioniert und von der zweiten Gruppe wird ebenfalls mindestens ein Lichtsender nahe an einem dem ersten Rand gegenüberliegenden zweiten Rand der Sender-Empfänger-Einheit angeordnet.

Mit dieser Anordnung wird eine hohe Empfindlichkeit des mehrstrahligen Reflexionslichtgitters in Bezug auf Fehlpositionen erreicht. Wenn mindestens ein Lichtsender der ersten Gruppe ein erstes Reflektorende überschreitet, lässt die Steuer- und Auswerteeinheit eine erste LED der Anzeigeneinrichtung blinken. Überschreitet mindestens ein Lichtsender der zweiten Gruppe ein zweites Reflektorende, so lässt die Steuer- und Auswerteeinheit über die Anzeigeeinrichtung eine zweite LED blinken, so dass der Benutzer unmittelbar erkennt, in welche Richtung die Sender-Empfänger-Einheit zu schwenken ist. Dabei wird zur Korrektur einer Fehlpositionierung die Sender-Empfänger-Einheit und/oder der Reflektor um eine Achse geschwenkt wird, die quer zu dem Überwachungsbereich in der Überwachungsebene angeordnet ist. Mit dem Überschreiten der Reflektorenden lässt die Steuer- und Auswerteeinheit die LEDs an unterschiedlichen Positionen, vorzugsweise an den Rändern der Sender-Empfänger-Einheit in Abhängigkeit der Größe des Überschreitens, unterschiedlich aufleuchten.

Um die Korrekturmöglichkeiten von Fehlpositionen weiter zu verbessern, können während des Ausrichtens die Lichtsender im Multiplexverfahren geschaltet werden, so dass die Ausrichtung entsprechend dem Reflexionssignal jedes einzelnen Lichtsenders durchgeführt werden kann. Andererseits werden beim reinen Überwachungsbetrieb vorzugsweise alle Lichtsender gleichzeitig eingeschaltet, um die Empfindlichkeit des mehrstrahligen Reflexionslichts zu erhöhen. Sofern die Lichtintensität ausreicht, ist es prinzipiell aber auch möglich, auch im Überwachungsbetrieb im Multiplexverfahren zu arbeiten.

Die Erfindung wird nun anhand der beigefügten Figuren näher erläutert.
- Figur 1: zeigt eine zeilenartige Anordnung einer Sender-Empfänger-Einheit gemäß einer ersten Ausführungsform;
- Figur 2: zeigt eine zeilenartige Anordnung einer Sender-Empfänger-Einheit gemäß einer zweiten Ausführungsform;
- Figur 3: zeigt eine schematische Ansicht eines mehrstrahligen Reflexionslichtgit- ters mit extremer Fehlpositionierung;
- Figur 4: zeigt eine schematische Ansicht des mehrstrahligen Reflexionslichtgitters gemäß Figur 3 nach einer ersten Korrektur der Fehlpositionierung;
- Figur 5: zeigt eine schematische Ansicht des mehrstrahligen Reflexionslichtgitters gemäß Figur 4 mit einer minimalen Fehlpositionierung.

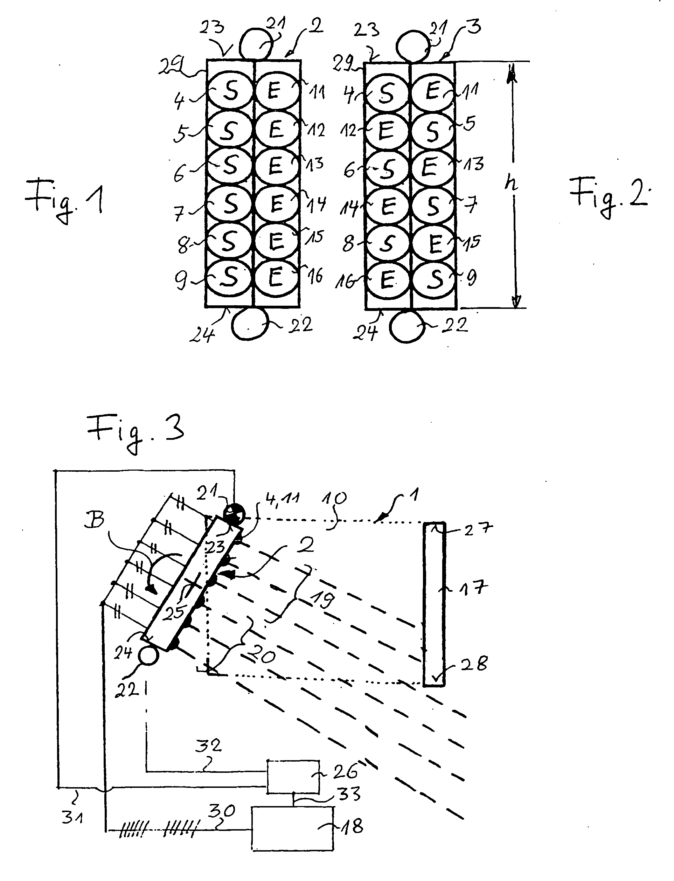

Figur 1 zeigt eine zeilenartige Anordnung einer Sender-Empfänger-Einheit 2 gemäß einer ersten Ausführungsform. Bei dieser Anordnung sind in einem gemeinsamen Gehäuse 29 sechs Lichtsender S mit den Bezugszeichen 4 bis 9 zeilenartig nebeneinander angeordnet und die zugehörigen Empfänger E mit den Bezugszeichen 11 bis 16 sind den Lichtsendern in einer weiteren Zeile zugeordnet. Eine derartige Sender-Empfänger-Einheit 2 weist einen oberen ersten Rand 23 auf, an dem eine erste LED 21 angeordnet ist. An einem unteren zweiten Rand 24 ist eine zweite LED 22 fixiert. Die LED 21 und die LED 22 dienen dazu, anzuzeigen, ob eine Fehljustierung den unteren Bereich oder den oberen Bereich der Sender-Empfänger-Einheit 2 betrifft. Eine derartige Sender-Empfänger-Einheit 2 mit zeilenartig angeordneten Lichtsendern S und Empfängern E kann einen Überwachungsbereich 10 sichern, dessen Ausdehnung des ausgeleuchteten Bereichs in einer Richtung deutlich größer ist, als in der Richtung quer dazu. Der Querschnitt des ausgeleuchteten Bereichs weist etwa die Form eines länglichen oder langgestreckten Rechtecks auf, wobei die Lichtsender 4 bis 9 nicht notwendigerweise auf einer Linie angeordnet sein müssen, wie es die nachfolgende Figur 2 zeigt. Prinzipiell können aber auch anders geformte, beispielsweise quadratische Reflektoren verwendet werden. Beispielsweise kann ein Reflektor eine Größe von 85 mm x 85 mm aufweisen.

Figur 2 stellt eine zeilenartige Anordnung einer Sender-Empfänger-Einheit 3 gemäß einer zweiten Ausführungsform dar. Komponenten mit gleichen Funktionen wie in Figur 1 sind mit gleichen Bezugszeichen gekennzeichnet und werden nicht extra erörtert. Der Unterschied zu Figur 1 besteht darin, dass bei dieser zeilenartigen Anordnung der Lichtsender 4 bis 9 und Empfänger 11 bis 16 die Sender S und die Empfänger E in einer Zick-Zack-Form zueinander angeordnet sind. Diese Form kann zu einem breiteren Überwachungsbereich führen. Eine vertikale Ausrichtung der Lichtsender S und der Empfänger E wie in dieser Ausführungsform ist nicht zwingend erforderlich, jedoch für den Fall einer Palettenerkennung kann die vertikale zeilenweise Anordnung von Vorteil sein, da bei der Palettenerkennung unterschiedlich hohe, beschädigte Paletten beziehungsweise Objekte mit undefinierter Vorderkante eines Transportsystems einer Fertigungshalle, einer Lagerhalle oder im Rahmen eines Bestückungssystems zuverlässiger erkannt werden sollen, als bei einem System mit Einzelstrahl-ReflexionsLichtschranken, bei dem beispielsweise beschädigte Paletten beim Vorbeigleiten nicht immer zuverlässig erfasst werden. Die Höhe h dieser mehrstrahligen Reflexionslichtgitter gemäß Figuren 1 und 2 kann beispielsweise 6 cm betragen.

Figur 3 zeigt eine schematische Ansicht eines mehrstrahligen Reflexionslichtgitters 1 mit extremer Fehlpositionierung der Sender-Empfänger-Einheit 2 in Bezug auf den Reflektor 17 und in Bezug auf den Überwachungsbereich 10. Um diese Fehlpositionierung zu erfassen, sind die sechs Sender-Empfänger-Paare in zwei Dreiergruppen, nämlich einer ersten oberen Gruppe 19 und einer zweiten unteren Gruppe 20, eingeteilt und mit einer Steuer- und Auswerteeinheit 18 über eine entsprechende Signalleitung 30 verbunden. An die Steuer- und Auswerteeinheit 18 ist über eine Verbindungsleitung 33 eine Anzeigeeinrichtung 26 angeschlossen, die einerseits über eine Anzeigeleitung 31 mit einer ersten LED 21 des oberen ersten Randes 23 der Sender-Empfänger-Einheit 2 verbunden ist und andererseits über eine zweite Anzeigeleitung 32 mit einer zweiten LED 22 am unteren zweiten Rand 24 der Sender-Empfänger-Einheit 2 verbunden ist.

Da die gesamte untere zweite Gruppe 20 der Lichtsender bei dieser extremen Fehlpositionierung nicht auf den Reflektor 17 trifft, sondern vielmehr an einem unteren zweiten Reflektorende 28 vorbeistrahlt, lässt die Anzeigeeinrichtung 26 die am unteren zweiten Rand 24 der Sender-Empfänger-Einheit 2 fixierte zweite LED 22 ausschalten, bis diese extreme Fehlposition korrigiert ist. Dieses kann dadurch erfolgen, dass ein Benutzer in Pfeilrichtung B die Sender-Empfänger-Einheit 2 um eine zu dem Überwachungsbereich 10 orthogonal ausgerichtete Achse 25 schwenkt, bis die zweite LED 22 am unteren zweiten Rand 24 der Sender-Empfänger-Einheit 2 im Dauerbetrieb aufleuchtet. In dem in Figur 3 gezeigten Zustand blinkt die LED 21, da von den insgesamt drei Strahlen der oberen Gruppe 19 nur zwei auf den Reflektor 17 treffen.

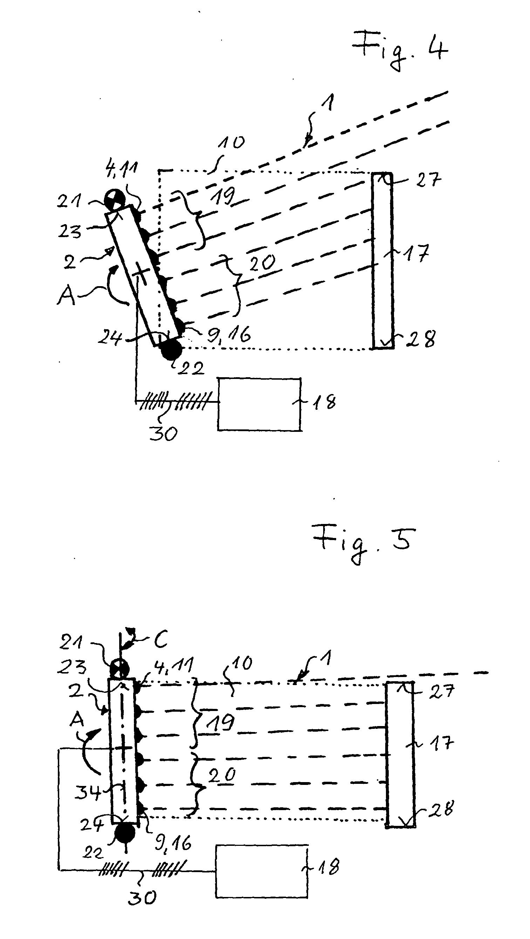

Figur 4 zeigt eine schematische Ansicht des mehrstrahligen Reflexionslichtgitters 1 gemäß Figur 3 nach einer ersten Korrektur der Fehlposition. Dabei wurde von dem Benutzer die Sender-Empfänger-Einheit 2 so weit um die Achse 25 geschwenkt, dass nun zwei Lichtstrahlen der ersten Gruppe 19 das obere erste Ende 27 des Reflektors 17 überschreiten, so dass die Steuer- und Auswerteeinheit 18 die erste LED 21 aufblinken lässt, was dem Benutzer signalisiert, dass lediglich eine kleine Drehbewegung in Pfeilrichtung A erforderlich wird, um das mehrstrahlige Reflexionslichtgitter in dem Überwachungsbereich 10 anzuordnen. Die LED 22 ist dauernd an, da von der unteren Gruppe 20 alle Strahlen auf den Reflektor 17 fallen.

Figur 5 stellt eine schematische Ansicht des mehrstrahligen Reflexionslichtgitters 1 gemäß Figur 4 mit einer minimalen Fehlpositionierung dar. Auch bei dieser minimalen Fehlpositionierung, bei der lediglich ein einzelner Lichtstrahl vom oberen ersten Rand 23 der Sender-Empfänger-Einheit 2 das obere erste Ende 27 des Reflektors 17 überschreitet, blinkt die erste LED 21 auf, um anzuzeigen, dass eine weitere Korrektur in Pfeilrichtung A erforderlich ist. Wie in der Situation in Figur 4 ist die LED 22 dauernd an, da von der unteren Gruppe 20 alle Strahlen auf den Reflektor 17 fallen.

Ferner zeigt Figur 5, dass nach der Korrektur sämtlicher Fehlpositionen eine weitere Kippbewegung in Pfeilrichtung C um eine Längsachse 34 der Sender-Empfänger-Einheit 2 möglich ist, um eine quantitative Bestimmung der relativen Ausrichtung der Sender-Empfänger-Einheit 2 und des Reflektors 17 auf der Grundlage der von dem Empfänger oder den Empfängern nachgewiesenen Lichtintensitäten zu ermöglichen. Mit dieser Kippbewegung in Pfeilrichtung C kann die größtmögliche reflektierte Lichtintensität erreicht werden, wobei beispielsweise von der Steuer- und Auswerteeinheit 18 ein optisches Signal beider LEDs 21 und 22 ausgelöst werden kann, bei dem eine unterschiedliche Helligkeit dem Benutzer ein Maximum an reflektierter Lichtintensität signalisieren kann. Anstelle einer Helligkeitsvariation können auch optisch unterschiedliche Impulslängen bis hin zum Dauerlicht der LEDs 21 und 22 ein Maximum an Lichtintensität anzeigen. Anstelle oder ergänzend zu optischen Anzeigen sind auch akustische Anzeigen möglich, bei denen die Lautstärke oder die Frequenz eines Tons geeignet variiert werden.

## Patentansprüche

1. Mehrstrahliges Reflexionslichtgitter
mit einer Sender-Empfänger-Einheit (2), welche eine Mehrzahl von Lichtsendern (4-9) zum Aussenden von Licht in einen Überwachungsbereich (10) und mindestens einen Empfänger (11) zum Nachweisen von aus dem Überwachungsbereich (10) kommendem Licht aufweist,
wobei die Lichtsender (4-9) zeilenartig nebeneinander beabstandet angeordnet sind,
mit einem Reflektor (17) zum Begrenzen des Überwachungsbereichs (10) und zum Zurückstrahlen des Lichts der Lichtsender (4-9) in Richtung des Empfängers (11) oder der Empfänger (11-16),
wobei die Lichtsender (4-9) und der Reflektor (17) einen Überwachungsbereich (10) aufspannen, und
mit einer Steuer- und Auswerteeinheit (18) zum Ansteuern der Lichtsender (4-9) und zum Auswerten der von dem Empfänger (11) oder den Empfängern (11-16) nachgewiesenen Lichtintensitäten,
**dadurch gekennzeichnet,**
**dass** die Steuer- und Auswerteeinheit (18) eingerichtet ist zum Ermitteln einer Bewegungsrichtung (A, B) der Sender-Empfänger-Einheit (2) und/oder des Reflektors (17) zum Beheben einer Fehlpositionierung der Sender-Empfänger-Einheit (2) bezüglich des Reflektors (17) auf Grundlage der von dem Empfänger (11) oder den Empfängern (11-16) nachgewiesenen Lichtintensitäten des von dem Reflektor (17) zurückgestrahlten Lichts der Lichtsender (4-9) und
**dass** zum Anzeigen der Bewegungsrichtung (A, B) für einen Benutzer mindestens eine Anzeigeeinrichtung (26) vorhanden ist.

2. Reflexionslichtgitter nach Anspruch 1,
**dadurch gekennzeichnet,**
**dass** die Steuer- und Auswerteeinheit (18) eingerichtet ist zum quantitativen Bestimmen der relativen Ausrichtung von Sender-Empfänger-Einheit (2) und Reflektor (17) auf Grundlage der von dem Empfänger (11) oder den Empfängern (11-16) nachgewiesenen Lichtintensitäten und
**dass** mit Hilfe der Anzeigeeinrichtung (26) und/oder einer weiteren Anzeigeeinrichtung die relative Ausrichtung von Sender-Empfänger-Einheit (2) und Reflektor (17) an einen Benutzer quantitativ signalisierbar ist.

3. Reflexionslichtgitter nach Anspruch 1 oder 2,
**dadurch gekennzeichnet,**
**dass** zum Anzeigen einer ersten Bewegungsrichtung (A) die Anzeigeeinrichtung (26) eine erste LED (21) an einem ersten Rand (23) der Sender-Empfänger-Einheit (2) und zum Anzeigen einer zweiten Bewegungsrichtung (B) eine zweite LED (22) an einem zweiten Rand (24) der Sender-Empfänger-Einheit (2) aufweist.

4. Reflexionslichtgitter nach einem der Ansprüche 1 bis 3,
**dadurch gekennzeichnet,**
**dass** die Sender-Empfänger-Einheit (2) und der Reflektor (17) den Überwachungsbereich (10) begrenzen und einander gegenüberliegend in einer Überwachungsebene angeordnet sind und
**dass** die Sender-Empfänger-Einheit (2) und/oder der Reflektor (17) um eine Achse (25), die quer zu der Überwachungsebene angeordnet ist, schwenkbar sind.

5. Reflexionslichtgitter nach einem der Ansprüche 1 bis 4,
**dadurch gekennzeichnet,**
**dass** die Lichtsender (4-9) der Sender-Empfänger-Einheit (2) mindestens eine erste Gruppe (19) aufweisen, die bei einer ersten Fehlpositionierung der Sender-Empfänger-Einheit (2) ein erstes Ende (27) des Reflektors (17) überschreiten kann und mindestens eine zweite Gruppe (20) aufweisen, die bei einer zweiten Fehlpositionierung der Sender-Empfänger-Einheit (2) ein zweites Ende (28) des Reflektors (17) überschreiten kann.

6. Reflexionslichtgitter nach einem der Ansprüche 1 bis 5,
**dadurch gekennzeichnet,**
**dass** die Steuer- und Auswerteeinheit (18) bei einer Fehlpositionierung optische Signale über die Anzeigeneinrichtung (26) an unterschiedlichen Positionen und/oder mit unterschiedlichen Farben und/oder mit unterschiedlichen Impulslängen ein Überschreiten der Reflektorenden (27, 28) kennzeichnet.

7. Reflexionslichtgitter nach einem der Ansprüche 1 bis 6,
**dadurch gekennzeichnet,**
**dass** die Steuer- und Auswerteeinheit (18) bei einer Fehlpositionierung akustische Signale über die Anzeigeneinrichtung (26) mit unterschiedlichen Frequenzen und/oder mit unterschiedlicher Impulslänge ein Überschreiten der Reflektorenden (27, 28) kennzeichnet.

8. Verfahren zum Ausrichten eines mehrstrahligen Reflexionslichtgitters (1) nach einem der Ansprüche 1 bis 7,
**dadurch gekennzeichnet,**
**dass** mit dem Empfänger (11) oder den Empfängern (11-16) Lichtintensitäten des von dem Reflektor (17) zurückgestrahlten Lichts der Lichtsender (4-9) nachgewiesen werden,
**dass** aus der Mehrzahl von Lichtsendern (4-9), die mit dem Reflektor (17) einen Überwachungsbereich (10) aufspannen, mindestens eine erste und eine zweite Gruppe (19, 20) von Lichtsendern (4-9) ausgewählt wird,
**dass** mit der Anzeigeeinrichtung (26) eine erste Bewegungsrichtung (A) für einen Benutzer durch ein erstes Signal angezeigt wird, wenn Licht von mindestens einem Lichtsender (4-6) der ersten Gruppe (19) nicht von dem Reflektor (17) zurückreflektiert und nicht von mindestens einem Empfänger (11) nachgewiesen wird,
**dass** mit der Anzeigeeinrichtung (26) eine zweite Bewegungsrichtung durch ein zweites Signal angezeigt wird, wenn Licht von mindestens einem Lichtsender (7-9) der zweiten Gruppe (20) nicht von dem Reflektor (17) zurückreflektiert und nicht von mindestens einem Empfänger (11) nachgewiesen wird, und
**dass** auf Grundlage der Signale der Anzeigeeinrichtung (26) von dem Benutzer eine Korrektur einer Fehlpositionierung durchgeführt wird.

9. Verfahren nach Anspruch 8,
**dadurch gekennzeichnet,**
**dass** nach dem Durchführen der Korrektur von Fehlpositionen eine quantitative Messung der empfangenen Lichtintensität erfolgt und die Position der Sender-Empfänger-Einheit (2) parallel zu einer Überwachungsebene solange in Bezug auf den Reflektor (17) geändert wird, bis eine maximale Lichtintensität an dem Empfänger (11) oder den Empfängern (11-16) erfasst und über die Anzeigeeinrichtung (26) optisch oder akustisch signalisiert wird.

10. Verfahren nach Anspruch 8 oder 9,
**dadurch gekennzeichnet,**
**dass** die erste Gruppe (19) der Lichtsender (4-6) mindestens einen Lichtsender (4) aufweist, der an einem ersten Rand (23) der Sender-Empfänger-Einheit (2) angeordnet wird.

11. Verfahren nach einem der Ansprüche 8 bis 10,
**dadurch gekennzeichnet,**
**dass** die zweite Gruppe (20) der Lichtsender (7-9) mindestens einen Lichtsender (9) aufweist, der an einem dem ersten Rand (23) gegenüberliegenden zweiten Rand (24) der Sender-Empfänger-Einheit (2) angeordnet wird.

12. Verfahren nach einem der Ansprüche 8 bis 11,
**dadurch gekennzeichnet,**
**dass** die Steuer- und Auswerteeinheit (18) eine erste LED (21) der Anzeigeneinrichtung blinken lässt, wenn mindestens ein Lichtsender (4-6) der ersten Gruppe (19) ein erstes Reflektorende (27) überschreitet, und eine zweite LED (22) blinken lässt, wenn mindestens ein Lichtsender (9) der zweiten Gruppe (20) ein zweites Reflektorende (28) überschreitet.

13. Verfahren nach einem der Ansprüche 8 bis 12,
**dadurch gekennzeichnet,**
**dass** zur Korrektur einer Fehlpositionierung die Sender-Empfänger-Einheit (2) und/oder der Reflektor (17) um eine Achse (25) geschwenkt werden, die quer zu dem Überwachungsbereich (10) in der Überwachungsebene angeordnet ist.

14. Verfahren nach einem der Ansprüche 8 bis 13,
**dadurch gekennzeichnet,**
**dass** in Abhängigkeit des Überschreitens der Reflektorenden (27, 28) die Steuer- und Auswerteeinheit (18) LEDs (21, 22) an unterschiedlichen Positionen vorzugsweise an den Rändern (23, 24) der Sender-Empfänger-Einheit (2) ausschalten lässt.

15. Verfahren nach einem der Ansprüche 8 bis 14,
**dadurch gekennzeichnet,**
**dass** während des Ausrichtens die Lichtsender (4-9) der Sender-Empfänger-Einheit (2) im Multiplexverfahren eingeschaltet werden, so dass die Ausrichtung entsprechend dem Reflexionssignal jedes einzelnen Lichtsenders (4-9) durchgeführt wird, und dass im Überwachungsbetrieb alle Lichtsender (4-9) gleichzeitig eingeschaltet werden.

## Claims

1. A multibeam reflex light grid
comprising a transceiver unit (2) that has a plurality of phototransmitters (4 to 9) for the purpose of emitting light into a monitored region (10) and at least one receiver (11) for detecting the light coming from said monitored region (10), wherein said phototransmitters (4 to 9) are disposed in separate lines at a distance to each other,
comprising a reflector (17) for delimiting the monitored region (10) and for reflecting the light emitted by said phototransmitter (4 to 9) in the direction of said receiver (11) or said receivers (11 to 16),
which phototransmitters (4 to 9) and said reflector (17) define a monitored region (10), and
comprising a control and evaluation unit (18) for controlling the phototransmitters (4 to 9) and for evaluating the light intensities detected by the receiver (11) or the receivers (11 to 16),
**characterized in that**
said control and evaluation unit (18) is adapted to ascertain a direction of motion (A, B) of said transceiver unit (2) and/or of said reflector (17) for the purpose of correcting a faulty positioning of said transceiver unit (2) with reference to said reflector (17) on the basis of the intensity of the light emitted by said phototransmitter (4 to 9) and reflected by said reflector (17) and detected by said receiver (11) or said receivers (11 to 16) and
that for the purpose of indicating the direction of motion (A, B) to a user at least one indicator (26) is present.

2. The reflex light grid as defined in claim 1,
**characterized in that**
said control and evaluation unit (18) is adapted to quantitatively determine the relative alignment of said transceiver unit (2) and said reflector (17) on the basis of the intensity of the light detected by said receiver (11) or said receivers (11 to 16) and
that with the aid of said indicator (26) and/or of another indicator the relative alignment of said transceiver unit (2) and said reflector (17) can be quantitatively indicated to a user.

3. The reflex light grid as defined in claim 1 or claim 2,
**characterized in that**
for the purpose of indicating a first direction of motion (A), said indicator (26) has a first LED (21) on a first edge (23) of said transceiver unit (2) and for the purpose of indicating a second direction of motion (B) said indicator (26) has a second LED (22) on a second edge (24) of said transceiver unit (2).

4. The reflex light grid as defined in any one of claims 1 to 3,
**characterized in that**
said transceiver unit (2) and said reflector (17) delimit said monitored region (10) and are disposed opposite each other in a monitoring plane, and
that said transceiver unit (2) and/or said reflector (17) are rotatable about an axis (25), which is at right angles to said monitoring plane.

5. The reflex light grid as defined in any one of claims 1 to 4,
**characterized in that**
said phototransmitters (4 to 9) in said transceiver unit (2) have at least one first group (19), which, when said transceiver unit (2) is in a first faulty position, can shine past a first end (27) of said reflector (17), and have at least one second group (20), which, when said transceiver unit (2) is in a second faulty positioning, can shine past a second end (28) of said reflector (17).

6. The reflex light grid as defined in any one of claims 1 to 5,
**characterized in that**
on the occurrence of faulty positioning, said control and evaluation unit (18) characterizes that with optical signals via said indicator (26) at different positions and/or with different colors and/or different pulse widths it indicates that light is shining past said reflector ends (27, 28).

7. The reflex light grid as defined in any one of claims 1 to 6,
**characterized in that**
on the occurrence of faulty positioning, said control and evaluation unit (18) characterizes that with acoustic signals via said indicator (26) with different frequencies and/or different pulse widths it indicates that light is shining past said reflector ends (27, 28).

8. A method for aligning a multibeam reflex light grid (1) as defined in any one of claims 1 to 7,
**characterized in that**
said receiver (11) or receivers (11 to 16) detect the intensity of the light emitted by said phototransmitters (4 to 9) and reflected by said reflector (17),
that from the plurality of phototransmitters (4 to 9), which with said reflector (17) define a monitored region (10), at least one first group and one second group (19, 20) of phototransmitters (4 to 9) is selected,
that by means of said indicator (26), a first direction of motion (A) is indicated to a user by a first signal, when the light emitted by at least one phototransmitter (4 to 6) in said first group (19) is not reflected back by said reflector (17) and is not detected by at least one receiver (11),
that by means of said indicator (26), a second direction of motion is indicated by a second signal, when light emitted by at least one phototransmitter (7 to 9) in said second group (20) is not reflected back by said reflector (17) and is not detected by at least one receiver (11), and
that on the basis of the signals of said indicator (26), the user performs a correction of a faulty position.

9. The method as defined in claim 8,
**characterized in that**
after the faulty positions have been corrected, a quantitative measurement of the intensity of light received is carried out, and the position of the transceiver unit (2) parallel to a monitoring plane is modified relatively to said reflector (17), until a maximum intensity of light is registered by said receiver (11) or said receivers (11 to 16) and is optically or acoustically indicated by said indicator (26).

10. The method as defined in claim 8 or claim 9,
**characterized in that**
said first group (19) of phototransmitters (4 to 6) has at least one phototransmitter (4) that is disposed at a first edge (23) of said transceiver unit (2).

11. The method as defined in any one of claims 8 to 10,
**characterized in that**
said second group (20) of phototransmitter (7 to 9) has at least one phototransmitter (9) that is disposed at a second edge (24) of said transceiver unit (2) opposite said first edge (23).

12. The method as defined in any one of claims 8 to 11,
**characterized in that**
said control and evaluation unit (18) causes a first LED (21) of said indicator to blink when at least one phototransmitter (4 to 6) in said first group (19) shines past a first reflector end (27), and causes a second LED (22) to blink when at least one phototransmitter (9) in said second group (20) shines past a second reflector end (28).

13. The method as defined in any one of claims 8 to 12,
**characterized in that**
for the purpose of correcting a faulty position, said transceiver unit (2) and/or said reflector (17) are swiveled about an axis (25) that is disposed in the monitoring plane at right angles to said monitored region (10).

14. The method as defined in any one of claims 8 to 13,
**characterized in that**,
depending on light shining past said reflector ends (27, 28), said control and evaluation unit (18) causes LEDs (21, 22) at different positions preferably at the margins (23, 24) of said transceiver unit (2) to switch off.

15. The method as defined in any one of claims 8 to 14,
**characterized in that**
during alignment, said phototransmitters (4 to 9) of said transceiver unit (2) are switched on by a multiplexing process, so that the alignment is carried out according to the reflexion signal of each individual phototransmitter (4 to 9), and that in the monitoring mode all of said phototransmitters (4 to 9) are switched on at the same time.

## Revendications

1. Rideau optoélectronique à réflexion à faisceaux multiples
avec une unité émettrice-réceptrice (2) qui comprend une pluralité d'émetteurs lumineux (4-9) pour émettre de la lumière dans une zone de surveillance (10) et au moins un récepteur (11) pour détecter la lumière en provenance de la zone de surveillance (10),
dans lequel les émetteurs lumineux (4-9) sont disposés en ligne à côté et à distance les uns des autres,
avec un réflecteur (17) pour limiter la zone de surveillance (10) et renvoyer la lumière des émetteurs lumineux (4-9) en direction du récepteur (11) ou des récepteurs (11-16),
dans lequel les émetteurs lumineux (4-9) et le réflecteur (17) couvrent une zone de surveillance (10), et
avec une unité de commande et d'analyse (18) pour commander les émetteurs lumineux (4-9) et analyser les intensités lumineuses détectées par le récepteur (11) ou les récepteurs (11-16),
***caractérisé***
***en ce que*** l'unité de commande et d'analyse (18) est conçue pour déterminer une direction de déplacement (A, B) de l'unité émettrice-réceptrice (2) et/ou du réflecteur (17) afin de corriger une erreur de positionnement de l'unité émettrice-réceptrice (2) par rapport au réflecteur (17) sur la base des intensités lumineuses de la lumière des émetteurs lumineux (4-9) réfléchies par le réflecteur (17) et détectées par le récepteur (11) ou les récepteurs (11-17), et
***en ce que***, pour afficher la direction de déplacement (A, B) à un utilisateur, il est prévu au moins un dispositif d'affichage (26).

2. Rideau optoélectronique à réflexion selon la revendication 1,
***caractérisé***
***en ce que*** l'unité de commande et d'analyse (18) est conçue pour déterminer quantitativement l'orientation relative de l'unité émettrice-réceptrice (2) et du réflecteur (17) sur la base des intensités lumineuses détectées par le récepteur (11) ou les récepteurs (11-16), et
***en ce qu'***à l'aide du dispositif d'affichage (26) et/ou d'un autre dispositif d'affichage, l'orientation relative de l'unité émettrice-réceptrice (2) et du réflecteur (17) peut être signalée de manière quantitative à un utilisateur.

3. Rideau optoélectronique à réflexion selon la revendication 1 ou 2,
***caractérisé***
***en ce que*** le dispositif d'affichage (26) comprend une première DEL (21) au niveau d'un premier bord (23) de l'unité émettrice-réceptrice (2) pour afficher une première direction de déplacement (A), et une deuxième DEL (22) au niveau d'un deuxième bord (24) de l'unité émettrice-réceptrice (2) pour afficher une deuxième direction de déplacement (B).

4. Rideau optoélectronique à réflexion selon l'une quelconque des revendications 1 à 3,
***caractérisé***
***en ce que*** l'unité émettrice-récpetrice (2) et le réflecteur (17) délimitent la zone de surveillance (10) et sont placés en vis-à-vis l'un de l'autre dans un plan de surveillance, et
***en ce que*** l'unité émettrice-réceptrice (2) et/ou le réflecteur (17) peuvent pivoter autour d'un axe (25) qui est placé transversalement au plan de surveillance.

5. Rideau optoélectronique à réflexion selon l'une quelconque des revendications 1 à 4,
***caractérisé***
***en ce que*** les émetteurs lumineux (4-9) de l'unité émettrice-réceptrice (2) comprennent au moins un premier groupe (19) qui, dans le cas d'une première erreur de positionnement de l'unité émettrice-réceptrice (2), peut dépasser une première extrémité (27) du réflecteur (17) et au moins un deuxième groupe (20) qui, dans le cas d'une deuxième erreur de positionnement de l'unité émettrice-réceptrice (2), peut dépasser une deuxième extrémité (28) du réflecteur (17).

6. Rideau optoélectronique à réflexion selon l'une quelconque des revendications 1 à 5,
***caractérisé***
***en ce qu'***en cas d'erreur de positionnement, l'unité de commande et d'analyse (18) indique un dépassement des extrémités (27, 28) du réflecteur par des signaux optiques par le biais du dispositif d'affichage (26) de différentes positions et/ou de différentes couleurs et/ou de différentes longueurs d'impulsion.

7. Rideau optoélectronique à réflexion selon l'une quelconque des revendications 1 à 6,
***caractérisé***
***en ce qu'***en cas d'erreur de positionnement, l'unité de commande et d'analyse (18) indique un dépassement des extrémités (27, 28) du réflecteur par des signaux acoustiques par le biais du dispositif d'affichage (26) de différentes fréquences et/ou de différentes longueurs d'impulsion.

8. Procédé d'orientation d'un rideau optoélectronique (1) à réflexion à faisceaux multiples selon l'une quelconque des revendications 1 à 7,
***caractérisé***
***en ce qu'***avec le récepteur (11) ou les récepteurs (11-16), les intensités lumineuses de la lumière des émetteurs lumineux (4-9) renvoyée par le réflecteur (17) sont détectées,
***en ce qu'***à partir de la pluralité d'émetteurs lumineux (4-9), qui couvrent une zone de surveillance (10) avec le réflecteur (17), au moins un premier et un deuxième groupes (19, 20) d'émetteurs lumineux (4-9) sont sélectionnés,
***en ce qu'***avec le dispositif d'affichage (26), une première direction de déplacement (A) est indiquée à un utilisateur par un premier signal lorsque la lumière d'au moins un émetteur lumineux (4-6) du premier groupe (19) n'est pas réfléchie par le réflecteur (17) et n'est pas détectée par au moins un récepteur (11),
***en ce qu'***avec le dispositif d'affichage (26), une deuxième direction de déplacement est indiquée par un deuxième signal lorsque la lumière d'au moins un émetteur lumineux (7-9) du deuxième groupe (20) n'est pas réfléchie par le réflecteur (17) et n'est pas détectée par au moins un récepteur (11), et
***en ce qu'***à partir des signaux du dispositif d'affichage (26), une correction d'une erreur de positionnement est effectuée par l'utilisateur.

9. Procédé selon la revendication 8,
***caractérisé***
***en ce qu'***après la conduite de la correction d'erreurs de positionnement, une mesure quantitative de l'intensité lumineuse reçue est effectuée et la position de l'unité émettrice-réceptrice (2) parallèlement à un plan de surveillance est modifiée par rapport au réflecteur (17) jusqu'à ce qu'une intensité lumineuse maximale soit détectée sur le récepteur (11) ou les récepteurs (11-16), et est signalée visuellement ou acoustiquement par l'intermédiaire du dispositif d'affichage (26).

10. Procédé selon la revendication 8 ou 9,
***caractérisé***
***en ce que*** le premier groupe (19) des émetteurs lumineux (4-6) comprend au moins un émetteur lumineux (4) qui est placé au niveau d'un premier bord (23) de l'unité émettrice-réceptrice (2).

11. Procédé selon l'une quelconque des revendications 8 à 10,
***caractérisé***
***en ce que*** le deuxième groupe (20) des émetteurs lumineux (7-9) comprend au moins un émetteur lumineux (9) qui est placé au niveau d'un deuxième bord (24) de l'unité émettrice-réceptrice (2) opposé au premier bord (23).

12. Procédé selon l'une quelconque des revendications 8 à 11,
***caractérisé***
***en ce que*** l'unité de commande et d'analyse (18) fait clignoter une première DEL (21) du dispositif d'affichage lorsqu'au moins un émetteur lumineux (4-6) du premier groupe (19) dépasse une première extrémité (27) du réflecteur, et fait clignoter une deuxième DEL (22) lorsqu'au moins un émetteur lumineux (9) du deuxième groupe (20) dépasse une deuxième extrémité (28) du réflecteur.

13. Procédé selon l'une quelconque des revendications 8 à 12,
***caractérisé***
***en ce que***, pour corriger une erreur de positionnement, l'unité émettrice-réceptrice (2) et/ou le réflecteur (17) est pivoté autour d'un axe (25) qui est placé transversalement à la zone de surveillance (10) dans le plan de surveillance.

14. Procédé selon l'une quelconque des revendications 8 à 13,
***caractérisé***
***en ce qu'***en fonction du dépassement des extrémités (27, 28) du réflecteur, l'unité de commande et d'analyse (18) éteint des diodes électroluminescentes (21, 22) en différentes positions, de préférence au niveau des bords (23, 24) de l'unité émettrice-réceptrice (2).

15. Procédé selon l'une quelconque des revendications 8 à 14,
***caractérisé***
***en ce que****,* pendant l'orientation, les émetteurs lumineux (4-9) de l'unité émettrice-réceptrice (2) sont mis en route en procédé multiplex, de telle sorte que l'orientation est effectuée en fonction du signal de réflexion de chaque émetteur lumineux (4-9), et *en ce qu'*en mode de surveillance, tous les émetteurs lumineux (4-9) sont mis en route simultanément.
